# EUROPÄISCHE PATENTSCHRIFT

(11) **EP 0 695 571 B1**
(45) Veröffentlichungstag und Bekanntmachung des Hinweises auf die Patenterteilung: **14.11.2001**
(21) Anmeldenummer: 95112180.5
(22) Anmeldetag: 03.08.1995
(51) Int. Cl.: B01D 21/24, B01D 21/01, B01D 21/02, B01D 29/09, B01D 29/68, B01D 29/70

(54) **Verfahren und Anordnung zum kontinuierlichen Entfernen von abfilterbaren Stoffen aus einer Flüssigkeit**
Process and arrangement for continuous removal of substances that can be filtered from a liquid
Procédé et dispositif pour l'élimination continue des matières filtrables d'un liquide

(30) Priorität: 03.08.1994 DE 4427432
(43) Veröffentlichungstag der Anmeldung: 07.02.1996
(73) Patentinhaber: Wilz, Hubert, 63773 Goldbach (DE)
(72) Erfinder: Wilz, Hubert, 63773 Goldbach (DE)
(74) Vertreter: Lippert, Hans, Dipl.-Ing.

(56) Entgegenhaltungen:
- DE-A- 2 513 972
- DE-U- 9 316 495

## Beschreibung

Die Erfindung bezieht sich auf ein Verfahren und eine Anordnung zum kontinuierlichen Entfernen von abfilterbaren Stoffen aus einer Flüssigkeit. Die Erfindung findet vorzugsweise Anwendung auf dem Gebiet der Abwasserreinigung, insbesondere Nachklärung nach Zugabe eines Flockungsmittels.

Die heute allgemein bekannten Filtrationsmöglichkeiten für kommunale und industrielle Abwässer haben in der Regel eigenständige Baukörper für die Filteranlagen, oder die Filterkonstruktionen selbst sind sehr aufwendig gebaut. Als Beispiele für solche Filterkonstruktionen seien Filterkammerpressen, Separatoren, Sandfilter usw. genannt. Für solche Filteranlagen und deren Becken, die meistens einer Nachklärung separat im Fließweg nachgeschaltet sind, wurden große, der Abwassermenge entsprechende Flüssigkeitsbehälter oder-becken aus Beton oder sonstigen Werkstoffen gebaut. Solche Bauwerke verursachen ohne die eigentliche Filteranlage schon enorme Baukosten. Filteranlagen ohne entsprechende Wasser-vorratsbehälter, wie z. B. Filterkammerpressen, haben entsprechend der Durchsatzmenge eine entsprechend große und kostenaufwendige Bauweise.
In einem am 23. Februar 1995 eingetragenen deutschen Gebrauchsmuster U-93 16 495 ist ein Absetzbecken für eine Abwasseranlage beschrieben. Der Rand des Beckens dient als Überlauf zum Abziehen von geklärtem Wasser aus dem Becken. Auf dem Beckenrand ist entlang des

Überlaufs ein mit Filtergewebe bespannter Rahmen angeordnet, der sich bis über den Wasserspiegel des Überlaufs erstreckt. Das aus dem Absetzbecken abgezogene, geklärte Wasser muß das Filtergewebe passieren, so daß Fein- und Feinststoffe zurückgehalten werden und lediglich gefiltertes Klarwasser aus dem Filtergewebe austritt. Zur Reinigung des Filtergewebes können an einer Räumerbrücke des Absetzbeckens Spritzwasserdüsen angeordnet sein, die das Filtergewebe entgegen der Fließrichtung des zu reinigenden Abwassers beaufschlagen. An der Räumerbrücke kann, den Spritzwasserdüsen und dem Filtergeweberahmen gegenüberliegend, ein Prallblech angeordnet sein, welches das von den Spritzwasserdüsen abgegebene Wasser sowie die vom Filtergewebe abgelösten Feststoffe auffängt und in das Becken zurückführt. Nachteilig dabei ist allerdings, daß das sich im Abwasser des Absetzbeckens bewegende Prallblech unerwünschte Turbulenzen im Absetzbecken hervorruft und das Filtergewebe gegen den statischen Druck des Abwassers im Absetzbecken gereinigt werden muß. Andernfalls müßte bei der Reinigung des Filtergewebes der Wasserspiegel im Absetzbecken abgesenkt werden, was unpraktikabel und aufwendig ist und wodurch ebenfalls der Absetzvorgang im Absetzbecken in unerwünschter weise beeinträchtigt wird. Nachteilig ist auch, daß die vom Filtergewebe abgelösten Feststoffe wieder dem Absatzbecken zugeführt werden und die Reinigung des Filtergewebes nicht kontinuierlich vorgenommen werden kann.

Aufgabe der Erfindung ist es daher, das Entfernen von abfilterbaren Stoffen aus einer in einem Behälter geklärten Flüssigkeit, insbesondere aus Abwasser, nicht nur einfacher und hinsichtlich der Bau- und Wartungskosten preiswerter vorzunehmen, sondern auch so durchzuführen, daß der Klärvorgang im Behälter möglichst wenig beeinträchtigt wird.

Gelöst wird diese Aufgabe nach der Erfindung durch ein Verfahren sowie eine Anordnung gemäß den beigefügten nebengeordneten Patentansprüchen. Vorteilhafte Weiterbildungen der Erfindung sind in Unteransprüchen gekennzeichnet.

Das Verfahren und die Anordnung nach der Erfindung finden vorzugsweise Anwendung in allen Rund- oder Längsbecken, die im übrigen in herkömmlicher Weise ausgebildet sein können. Die als Räumer-Sieb (R-S) genannte Erfindung kann mit und ohne einen vorgeschalteten Flockungsraum betrieben werden.

Die Erfindung kann in ohnehin geplante oder bestehende Medienbehälter (Becken) einer entsprechenden Klärstufe eingebaut werden und erspart somit einen eigenen Medienbehälter. Die üblicherweise benötigten Ablaufrinnen aus den Becken bekommen durch die Erfindung die zusätzliche Funktion als Rumpfgehäuse, das Räumer-Sieb zu tragen. Somit werden schon vorhandene und ohnehin benötigte Baukörper und deren Einbauten nach Möglichkeit optimiert.

Bevorzugte Ausführungsbeispiele der Erfindung werden an Hand von Zeichnungen beispielshalber beschrieben.

Es zeigen:
**FIG. 1** eine schematische geschnittene Ansicht eines Medienbehälters oder Flüssigkeitsbehälters mit angegebener Fließrichtung und einer nach der Erfindung ausgebildeten Ablaufrinne mit entsprechenden Einbauten,
**FIG. 2** eine schematische Querschnittsansicht durch einen Abschnitt eines gegenüber **FIG. 1** geringfügig modifizierten Medienbehälters mit einem Flockungsraum und einer Ablaufrinne, in der eine horizontal angeordnete Räumvorrichtung nach der Erfindung vorgesehen ist. **FIG. 3** eine schematische Querschnittsansicht durch eine nach der Erfindung ausgebildete Ablaufrinne mit Ablaufrand sowie horizontal angeordnetem Filtersieb und Räumwagen in Räumposition (Sieb gehoben),
**FIG. 4** eine schematische Längsschnittansicht durch eine nach der Erfindung ausgebildete Ablaufrinne mit horizontal angeordnetem Filtersieb und Räumwagen in Räumposition (Sieb gehoben),
**FIG. 5** eine schematische Querschnittsansicht durch eine nach der Erfindung ausgebildete Ablaufrinne mit horizontal angeordnetem Filtersieb in Filteranlage (Sieb abgesenkt), und
**FIG. 6** eine schematische Querschnittsansicht durch den in FIG. 3 dargestellten Teil der Ablaufrinne, jedoch mit einer nach der Erfindung ausgebildeten Räumvorrichtung in vertikaler Anordnung mit vertikalem Auflagerrand, Filtersieb und Räumerwagen mit Auffangvorrichtung.

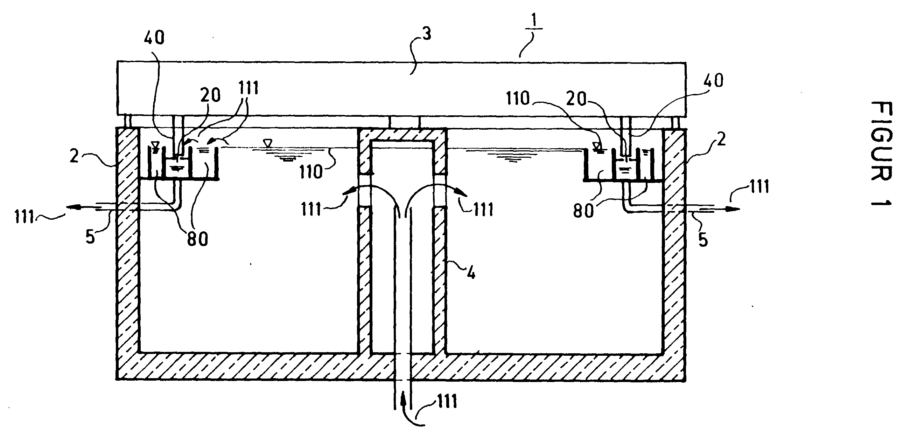

FIG. 1 zeigt als Teil einer Kläranlage zur Abwasserreinigung ein Rundbecken 1 im vertikalen Schnitt als Medienbehälter, durch den eine zu filtrierende Flüssigkeit fließt. Die Fließrichtung der Flüssigkeit ist durch eingezeichnete Fließpfeile 111 angegeben. Abgesehen von einer Filterablaufrinne 20 und damit verbundene Einbauten kann das Rundbecken 1 in herkömmlicher Weise ausgebildet sein.

Das Rundbecken 1 hat eine Außenwand 2, an deren Innenseite die beidseitig rechts und links von einem Flockungsraum 80 umgebene Filterablaufrinne 20 angehängt ist. Aufgrund einer in freier Wasserspiegellagen 110 durchflossenen Anlage ergeben sich im Becken 1 einschließlich der Flockungsräume 80 und der Filterablaufrinne 20 verschiedene Wasserspiegelhöhen 110.

Auf der Außenwand 2 des Beckens 1 liegt eine sich im Kreis kontinuierlich drehende Räumerbrücke 3 auf, die in herkömmlicher Weise gefertigt sein kann. Vorzugsweise ist an der Räumerbrücke 3 ein nach der Erfindung ausgebildeter Räumerwagen 40 (in FIG. 1 im einzelnen nicht gezeigt) mit seinem Reinigungs- und Bewegungsapparat angehängt. Der Räumerwagen kann jedoch auch einen eigenen, von der Räumerbrücke unabhängigen Antrieb haben.

In der Filterablaufrinne 20 befindet sich ein Filtersieb (in FIG. 1 nicht dargestellt), durch das die in die Filterrinne 20 überlaufende zu filtrierende Flüssigkeit fließt. Die gefilterte Flüssigkeit wird vom Boden der Ablaufrinne 20 über eine Ableitung 5 abgeführt.

Die auf der auch Oberseite genannten Zulaufseite des Filtersiebs abgefilterten Partikel können durch Rohrleitungen über das Mittelbauwerk 4 oder an der Außenwand 2 des Beckens 1 installierte Aufnahmevorrichtungen (in FIG. 1 nicht dargestellt) abgegeben und somit einem eigenen Verwendungszugeführt werden.

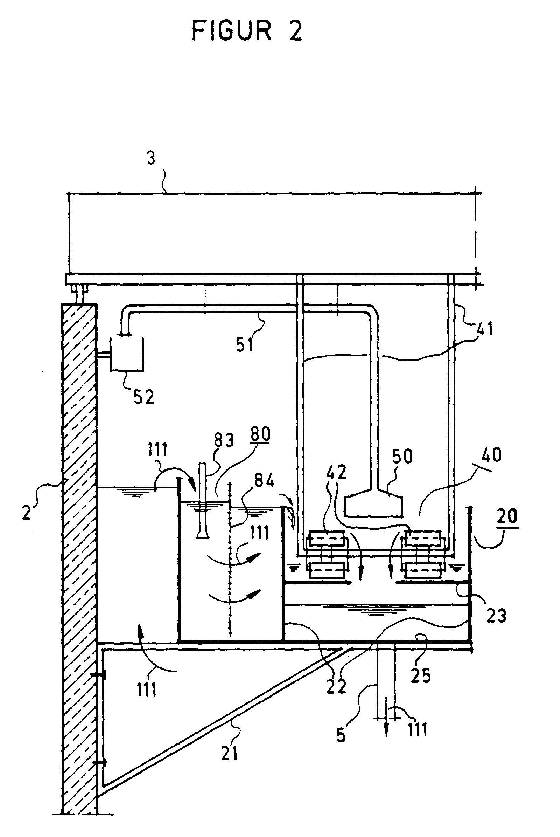

Nachstehend soll auch auf FIG. 2 Bezug genommen werden, die ein vorteilhaftes Ausführungsbeispiel für den Bau und Betrieb einer nach der Erfindung ausgebildeten Filterablaufrinne 20 mit einem einseitig angeordneten Flockungsraum 80 (Fällraum) in Kastenrinnenform zeigt. Die Ablaufrinne 20 und die Rinne des Flockungsraums 80 können aus verschiedensten Materialien hergestellt und geformt sein. Bei dem gezeigten Ausführungsbeispiel werden sie von einer Konsole 21 getragen, die an der Außenwand 2 des Beckens 1 verankert ist.

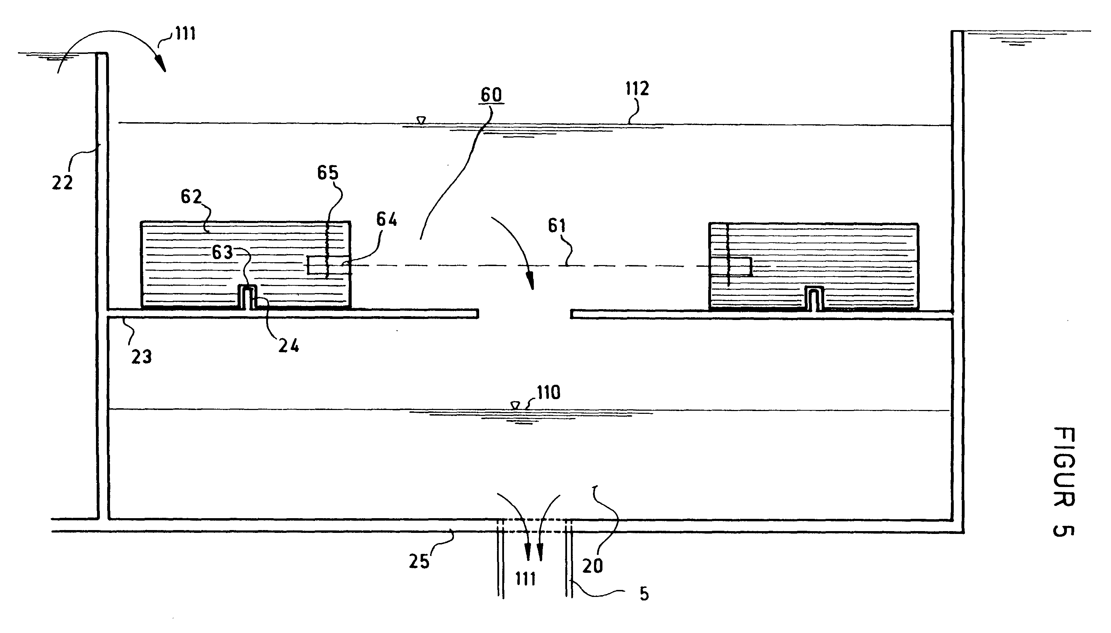

Der Flockungsraum 80 ist direkt an die Innenwände 22 der Filterablaufrinne 20 mit eigenen Rinnenwänden und Boden angehängt oder damit fest verbunden, z.B. durch Anschweißen. In den Flockungsraum 80 kann mittels eines Eingebers 83 ein Flockungsmittel eingegeben werden. Das Flockungsmittel verteilt sich in Fließrichtung 111 durch eine Mischvorrichtung 84, z.B. Leitwände oder Rührwerke, gleichmäßig in das zu flockende Medium. Das durch das Flockungsmittel angereicherte Medium verläßt in Fließrichtung 111 den Flockungsraum 80 und trifft in Fließrichtung gesehen auf die Oberseite des Filtersiebes (60 in FIG. 5) in der Filterablaufrinne 20. Die zu filternde Flüssigkeit durchfließt das Sieb und sammelt sich von den abfilterbaren Stoffen getrennt am Boden 25 der Ablaufrinne 20 und kann so seiner Bestimmung über die Ableitung 5 zugeleitet werden.

In der Ablaufrinne 20 ist eine längs der Rinne bewegbare Vorrichtung zum Anheben aufeinanderfolgender Abschnitte des Siebes in Form des Räumerwagens 40 vorgesehen. Bei dem betrachteten Ausführungsbeispiel ist der Räumerwagen 40 mit Hilfe eines auch als Aufhängung dienenden Führungsgestänges 41 an der sich kontinuierlich drehenden Räumerbrücke 3 angebracht. Der Räumerwagen 40 hat Rollen 42, die mit dem Führungsgestänge 41 verbunden sind und auf in der Ablaufrinne 20 ausgebildeten Auflagerändern 23 aufliegen. Ferner zeigt FIG. 2 noch eine Vorrichtung 50 zum Entfernen bzw. Aufnehmen des auf der Oberseite des Siebes anfallenden Filterguts, das über eine Ableitung 51 einem Filtersammelgutbehälter oder -trog 52 zugeführt werden kann. Die Aufnahmevorrichtung 50 und die Ableitung 51 bewegen sich zusammen mit der Räumerbrücke 3 bzw. dem Räumerwagen 40, und es sind diesbezügliche, in FIG. 2 dargestellte Befestigungsmittel mit der Aufhängung bzw. der Räumerbrücke 3 vorgesehen. Der Trog 52 kann an der Innenseite der Außenwand 2 des Beckens 1 befestigt sein.

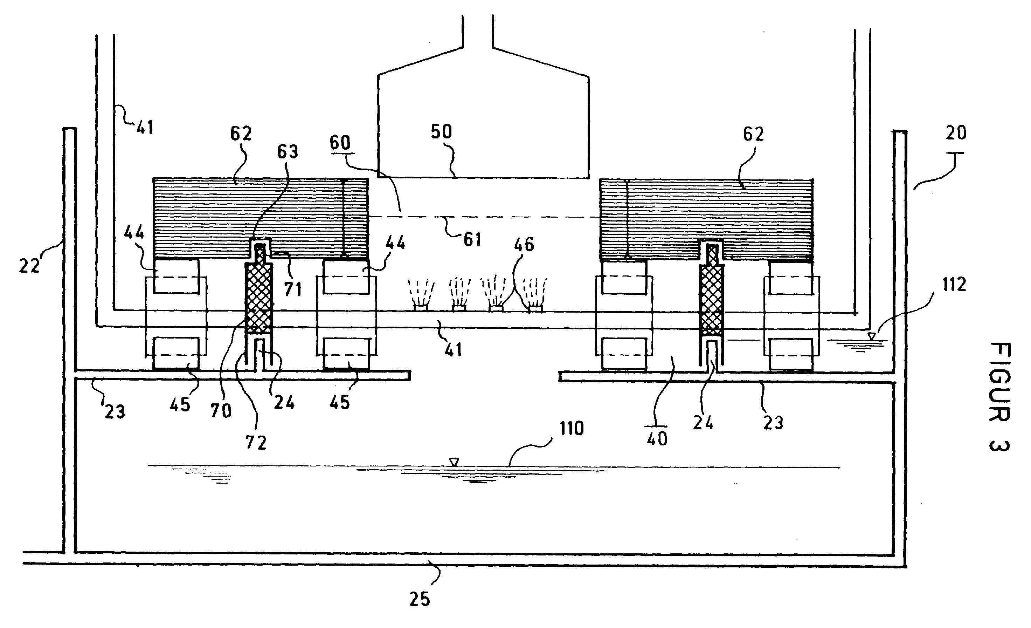

FIG. 3 zeigt eine bevorzugte Ausführungform des Räumerwagens 40 und dessen Auflager 23 sowie das Sieb 60 im vertikalen Schnitt und quer (horizontal) zur Ablaufrinne 20.

Wie aus FIG. 3 ersichtlich, besteht der Räumerwagen 40 aus einem rechten und linken Wagenteil, die jeweils auf einem rechten bzw. linken horizontalen Auflager 23 laufen und durch ein Führungsgestänge 41 miteinander verbunden sind, das gleichzeitig als Aufhänger an der Räumerbrücke 3 dient. Die Auflager 23 sind an den Wänden 22 der Ablaufrinne 20 befestigt, beispielsweise angeschweißt, und mit das Siebgewebe 61 abstützenden Stegen miteinander verbunden. Der Räumerwagen 40 wird, wie bereits erwähnt, durch den Bewegungsablauf der Räumerbrücke 3 in Bezug auf das Sieb 60 und die Ablaufrinne 20 bewegt. An dieser Stelle sei nochmals bemerkt, daß der Räumerwagen 40 allerdings einen eigenen Antrieb (nicht gezeigt) haben kann. Ein am Führungsgestänge 41 angebrachtes Rollensystem besteht aus einem oberen Rollenlager 44 und einem unteren Rollenlager 45. Das untere Rollenlager 45 liegt auf dem Auflagerrand 23 auf und trägt zugleich das obere Rollenlager 44, über das das Filtersieb 60 angehoben und abgesenkt wird. Die Rollenlager selbst sind mit Quer- und Längsverstrebungen miteinander verbunden.

Das Filtersieb 60 besteht aus einem Siebgewebe 61 und zwei Haltepolstern, an denen das Siebgewebe 61 in der gezeigten Weise befestigt ist. Das Gewebematerial des Siebgewebes 61 ist in Abhängigkeit von dem gewünschten Filtergrad durchlässig. Das Filtersieb spannt sich quer über die Ablaufrinne 20 vom einen Auflagerrand 23 zum anderen Auflagerrand 23, auf denen die Haltepolster 62 in Filterstellung (FIG. 5) aufliegen.

FIG. 3 zeigt das Filtergewebe 61 und die Haltepolster 62 in angehobenem Zustand auf dem oberen Rollenlager 44 aufliegend. Auf der Unterseite jedes Haltepolsters 62 ist vorteilhafterweise eine Nut 63 vorgesehen, die sich beim Absenken des Filtersiebes 60 in eine auf jedem Auflagerrand 23 aufrecht stehende Feder 24 einlegt. Die Haltepolster 62 bestehen vorzugsweise aus Hartgummi und können zur besseren Flexibilität einen Kunststoffgittergewebekern besitzen. Die Haltepolster können verschieden geformt und verschieden miteinander verbunden sein. Die Haltepolster können auch zusammen mit dem Siebgewebe ein Endlosband bilden, das in der Ablaufrinne von Rundbecken verläuft.

Am Räumerwagen kann noch eine Vorrichtung zum Freispülen und/oder Freiblasen für die auf der Oberseite des Siebes abgefilterten Stoffe vorgesehen sein. Zu diesem Zweck kann man vorteilhafterweise das Führungsgestänge 41 als eine Zuleitung ausbilden, in der Luft und/oder Wasser über Austrittsdüsen 46 das Siebgewebe 61 von unten freispülen und/oder freiblasen.

Da die über dem Filtersiebgewebe 61 befindliche Filtergutaufnahmevorrichtung 50 ebenfalls am Führungsgestänge 41 befestigt ist, bildet die gesamte Räumvorrichtung eine mit sich selbst starr verbundene Einheit, die nur über das Führungsgestänge 41 mit einem eigenen oder fremden Antriebsaggregat verbunden ist und von diesem in bezug auf das stationäre Sieb in der Rinne bewegt werden kann.

Des weiteren ist am Führungsgestänge 41 eine Dichtscheibe 70 befestigt, die eine seitliche Abdichtung während des Reinigungsräumvorganges des angehobenen Siebes 60 zur Ablaufrinne 20 vornimmt. Die Dichtscheibe 70 ist zwischen den Rollenlagern in der gezeigten Weise so installiert, daß sie den Zwischenraum zwischen den Haltepolstern 63 und dem Auflagerrand 23 gegen seitliches Einströmen von ungefilterter Flüssigkeit in die Ablaufrinne 20 unterhalb des Siebes 60 verhindert.

Die Dichtscheibe 70 ist vorzugsweise so gestaltet, daß sie mit einer an ihrer Oberseite stehenden Feder 71 in der Nut 63 des Haltepolsters 62 verläuft und dadurch die Dichteigenschaften der Feder 24 der Auflager 23 während des Anhebevorganges des Siebes übernimmt.

Die selbe Aufgabe übernimmt eine Nut 72 an der Unterseite der Dichtscheibe 70 zur Feder 24 der Auflager 23, bei denen es sich um Bleche handeln kann. Die sich zusammen mit dem Räumerwagen 40 bewegende Dichtscheibe 70 hat somit die Funktion, den entstehenden Zwischenraum zwischen den Haltepolstern 62 und den Auflagern 23 während des Anhebevorganges des Filtersiebes 60 gegen seitlichen Wassereintritt zu schließen.

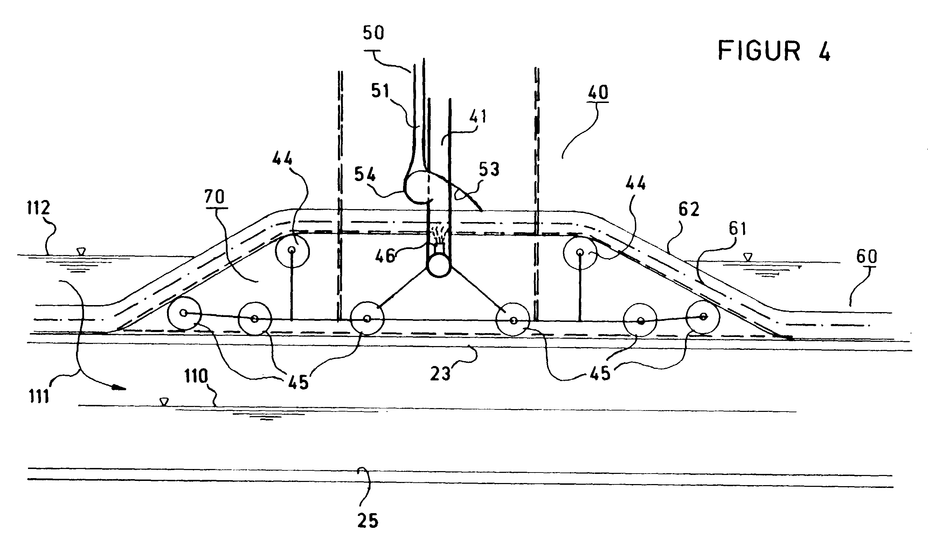

FIG. 4 zeigt den Räumerwagen 40 mit der Filteraufnahmevorrichtung 50 sowie das Filtersieb 60 im Längsschnitt zur Filterablaufrinne 20.

Die Filtergutaufnahmevorrichtung 50 hat vorzugsweise ein Auffanggehäuse 53 in Spiralform. Die sich in der gezeigten Weise nach innen verjüngende Spiralform begünstigt den Fließweg des vom Siebgewebe 61 abgespülten und/oder geblasenen Filterguts in eine Auffangrinne 54 am Ende der Spirale. So kann das in der Auffangrinne 54 angelangte Filtergut über die Ableitung 51 in den Filtergutsammelbehälter oder Trog 52 (FIG. 1) transportiert bzw. gesaugt oder gepumpt werden. An der Filtergutaufnahmevorrichtung 50 können Zusatzgeräte wie Bürsten, Schieber usw. zur Unterstützung des Räumvorganges angebracht sein. Wie es aus FIG. 4 ersichtlich ist, wird während des Räumvorganges des Filtersiebes 60 das mit den Haltepolstern 62 verbundene Siebgewebe 61 aus seiner Filterlage auf den Auflagern 23, von dem sich bewegenden Räumerwagen 40 aufeinanderfolgend und kontinuierlich über den Einströmwasserpegel 112 herausgehoben. In diesem herausgehobenen Zustand wird das Sieb 60 von den oberen Rollenlagern 44 unterstützt. In der herausgehobenen Lage hängt das Siebgewebe 61 frei und kann somit vorteilhafterweise von den unter dem Siebgewebe 61 angeordneten Düsen 46 vom Filtergut freigeblasen und/oder freigespült werden. Der Zwischenraum, der zwischen der Unterseite der Haltepolster 62 und dem Auflagerrand 23 entsteht und am Anfang und Ende des Räumerwagens 40 keilförmig zuläuft, wird durch die zwischen den Rollenauflagern angeordnete Dichtscheibe 70 gegen seitliches Einströmen von ungefilterter Flüssigkeit abgedichtet.

FIG. 5 zeigt das Filtersieb 60 im Querschnitt mit Siebgewebe 61 und Haltepolster 62 in Filterposition auf dem Auflagerrand 23 aufliegend. Wie man sieht, ist während des Filtervorganges das gesamte Filtersieb 60 durch die von oben über die Oberkante der Filterablaufrinnenwand herabströmende Flüssigkeit bis zu einem gewissen Wasserspiegelstand 112 überstaut. Diese Wasserstandshöhe drückt die zu filternde Flüssigkeit durch das Siebgewebe 61, und auf der Unterseite des Siebgewebes 61 fließt die Flüssigkeit getrennt von den absieb- und filterbaren Stoffen als Reinwasser über den Ablaufrinnenboden 25 und die Ableitung 5 ab.

Die auf dem Auflagerrand 23 aufrecht stehende Feder 24 ist vorteilhafterweise horizontal justierbar, um das Siebgewebe 61 bei Bedarf vom einen zum anderen Auflagerrand spannen zu können. Die Spannung auf das Siebgewebe 61 wird über die Nut 63, die sich auf die Feder 24 auf dem Auflager 23 stülpt, in das Haltepolster 62, an dem das Siebgewebe 61 befestigt ist, übertragen.

Das Ineinandergreifen der Nut 63 und der Feder 24 wirkt bei entsprechender Ausbildung als Dichtung zwischen dem Auflagerrand 23 und dem Boden 25 der Ablaufrinne, so daß nur gefilterte Flüssigkeit zum Boden 25 gelangt.

Die Verbindung zwischen dem Siebgewebe 61 und dem Haltepolster 62 erfolgt vorteilhafterweise in Form einer Klemmverbindung mit einem im Haltepolster 62 ausgebildeten Klemmspalt 64, in den das Siebgewebe 61 eingeführt und der mittels einer Schraube 65 fest zusammengepreßt ist. Auf diese Weise wird das Siebgewebe 61 fest in seiner Lage zwischen den Haltepolstern 62 gehalten.

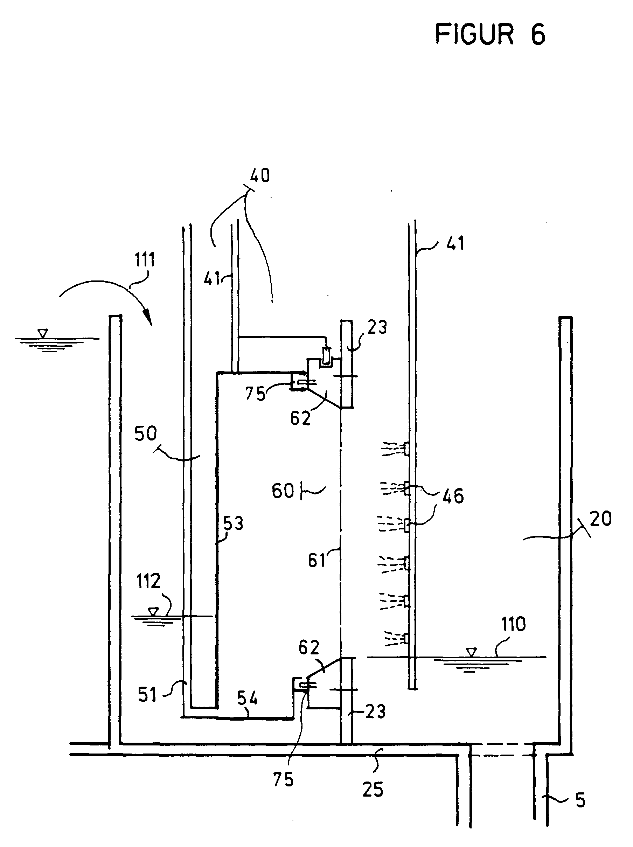

FIG. 6 zeigt eine vertikal angeordnete Räumvorrichtung nach der Erfindung während des Reinigungsvorgangs. In FIG. 6 sind einige Teile mit denselben Bezugszahlen wie in FIG. 1 bis 5 versehen. Diese Teile haben einen gleichen oder einen ähnlichen Aufbau bzw. eine gleiche oder ähnliche Funktion wie in den vorangegangenen Figuren, so daß auf die vorangegangene diesbezügliche Beschreibung verwiesen werden kann. Die nachstehende Erläuterung und Beschreibung befaßt sich daher im wesentlichen mit den Unterschieden zwischen der insbesondere in FIG. 2 und 3 dargestellten horizontalen Ausführung und der in FIG. 6 dargestellten vertikalen Ausführung der Erfindung.

Im Gegensatz zur horizontalen Anordnung sind bei der vertikalen Anordnung die Auflager oder Auflagerränder 23 in der gezeigten Weise senkrecht übereinander an der Ablaufrinne 20 befestigt. Hierbei können der obere und untere Auflagerrand 23 durch aussteifende Stege (nicht gezeigt) miteinander verbunden sein, die auch das Siebgewebe abstützen. Das Siebgewebe 61 des senkrecht in der Ablaufrinne 20 stehenden Filtersiebs 60 ist in die Haltepolster 62 eingeklemmt, die jedoch im Gegensatz zur horizontalen Ausführung bei der hier betrachteten vertikalen Ausführung mit den Auflagerrändern 23 fest verbunden sind. Die zu filtrierende Flüssigkeit strömt durch das Filtersieb 60 in Fließrichtung 111 von oben (Zulaufseite) nach unten (Ablaufseite) und läuft auf dem Rinnenboden 25 ab in die Ableitung 5.

Der Räumerwagen 40 ist an den beiden senkrecht stehenden Auflagerrändern 23 eingehängt, und zwar vorzugsweise an den Haltepolstern 62, die sich vorzugsweise in Längsrichtung des Siebs 60 über dessen gesamte Länge erstrecken. Der Räumerwagen 40 deckt in Längsrichtung des Siebs 60 gesehen, lediglich einen kurzen, gerade zu reinigenden Siebabschnitt ab und kann von der Räumerbrücke 3 (FIG. 2) oder einem eigenen Antrieb längs der Haltepolster 62 bzw. der Auflagerränder 23 bewegt werden.

Die Filtergutaufnahmevorrichtung 50 zum Entfernen und Aufnehmen des Filtergutes ist mit dem Räumerwagen 40 fest verbunden und läuft auf der Oberseite bzw. Zulaufseite des Filtersiebes 60 bzw. des Siebgewebes 61 entlang und nimmt das vom Filtersieb 60 zurückgehaltene Filtergut auf. Das Filtergut wird durch ein vorzugsweise kastenförmiges Auffanggehäuse 53 aufgefangen, in einer Auffangrinne 54 am Boden des Auffanggehäuses 53 gesammelt und über die Ableitung 51 in einen Sammelbehälter transportiert. Die Reinigung des Filtersiebes 60 wird unterstützt durch die Sprühdüsen 46, die Luft und/oder Wasser durch das Siebgewebe 61 von der Unterseite bzw. Ablaufseite her blasen oder sprühen, und zwar in ähnlicher Weise wie es in Verbindung mit FIG. 3 beschrieben worden ist. Die Sprühdüsen 46 sind gleichermaßen wie der Räumerwagen 40 am Führungsgestänge 41 angebracht und bewegen sich daher zusammen mit dem Auffanggehäuse 53 und der Aufnahmevorrichtung 50 in Längsrichtung des feststehenden Filtersiebes 60.

Im Gegensatz zu der horizontalen Anordnung wird bei der hier beschriebenen senkrechten Anordnung der gerade zu reinigende Siebabschnitt während des Reinigungsvorganges nicht aus der Flüssigkeit gehoben. Die Konstruktion des Räumerwagens 40 und der Aufnahmevorrichtung 50 ist vielmehr so getroffen, daß der in Längsrichtung des Filtersiebes 60 wandernde Innenraum des Auffanggehäuses 62 möglicht gut von der zu filternden Flüssigkeit abgesperrt ist. Dieses Absperren kann mittels einer Dichtvorrichtung 75 aus Nut und Feder für den Bereich der Haltepolster 62 und durch nicht gezeigte Dichtrollen im Bereich des Siebgewebes 61 erreicht werden. Die Dichtvorrichtung 75 und die Dichtrollen können an der Aufnahmevorrichtung 50 bzw. dem Auffanggehäuse 53 befestigt sein.

Während bei dem oben beschriebenen ersten Ausführungsbeispiel der Erfindung zum Reinigen des Siebes kontinuierlich aufeinanderfolgende Abschnitte des Siebes über das Flüssigkeitsniveau angehoben werden, erfolgt bei dem oben beschriebenen zweiten Ausführungsbeispiel der Erfindung die Entfernung der abgefilterten Stoffe ohne Anhebung des Siebes, und zwar von dessen Oberseite bzw. Zulaufseite her mittels einer Vorrichtung, die in Längsrichtung des im wesentlichen stationär in der Rinne stehenden Siebes verschoben wird. Prinzipiell ist es auch möglich, das Sieb horizontal liegend in der Rinne ohne Anhebung des zu reinigenden Siebabschnitts anzuordnen. Diese Art der Entfernung der abgefilterten Stoffe von der Oberseite des Siebes kann jedoch zu dem Nachteil führen, daß auch ein gewisser Flüssigkeitsanteil mit entfernt wird, was davon abhängt, wie hoch der Aufwand für die Abdichtung zwischen der Oberseite des in der Rinne ruhenden Siebes und der gegenüber dem Sieb bewegten Entfernungsvorrichtung getrieben wird.

Die oben beschriebenen Ausführungsbeispiele und Ausführungsformen der Erfindung sind nicht als Begrenzung des Erfindungsgedankens anzusehen. Vielmehr sind Veränderungen und Abwandlungen durch den Anwendungsfall leicht durchzuführen, ohne den Grundgedanken und den Rahmen der Erfindung zu verlassen.

Die Erfindung findet vorzugsweise Anwendung bei der Ablaufrinne einer Kläranlage, insbesondere bei der Ablaufrinne eines Nachklärbeckens. Hierbei kann die Ablaufrinne zusammen mit einem angrenzenden Flockungsraum eine Baueinheit bilden.

Ein anderes Anwendungsgebiet der Erfindung ist beispielsweise das Trennen von Sedimenten und Stoff in verschiedenen Produktionen, beispielsweise bei der Lebensmittelherstellung und in der chemischen Industrie.

## Patentansprüche

1. Verfahren zum kontinuierlichen Entfernen von abfilterbaren Stoffen aus einer in einem Behälter geklärten Flüssigkeit, bei dem man
mittels einer Ablaufrinne (20) geklärte Flüssigkeit aus dem Behälter (2) durch Überlauf in die Ablaufrinne (20) abzieht,
die abgezogene Flüssigkeit von der Oberseite bzw. Zulaufseite her durch ein ausschließlich innerhalb der Ablaufrinne (20) angeordnetes, langgestrecktes Sieb (60) fließen läßt,
die durch das Sieb (60) geflossene gefilterte Flüssigkeit auf der Unterseite bzw. Ablaufseite des Siebes aus der Ablaufrinne (20) abführt, und
die abgefilterten Stoffe von der Oberseite bzw. Zulaufseite in Längsrichtung des Siebes (60) aufeinanderfolgender Siebabschnitte entfernt.

2. Verfahren nach Anspruch 1, bei dem man einen in Längsrichtung des im übrigen ruhenden Siebes (60) wandernden Siebabschnitt über den Flüssigkeitsspiegel (112) in der Ablaufrinne (20) anhebt, die abgefilterten Stoffe von der Oberseite des jeweils über den Flüssigkeitsspiegel (112) angehobenen Siebabschnitts entfernt, und nach Möglichkeit die beim Anheben des Siebabschnitts gegebenenfalls auftretende Siebumgehung in einem abgedeckten Zustand hält, so daß im wesentlichen keine ungefilterte Flüssigkeit von der Oberseite bzw. Zulaufseite des Siebes (60) zu dessen Unterseite bzw. Ablaufseite gelangen kann.

3. Verfahren nach Anspruch 1, bei dem man die aufeinanderfolgend zu reinigenden Siebabschnitte auf der Oberseite bzw. Zulaufseite des Siebes (60) derart abschirmt, daß möglichst wenig ungefilterte Flüssigkeit in einen in Längsrichtung des Siebes (60) wandernden Raum gelangt, der zum Auffangen der vom Sieb abgefilterten Stoffe dient.

4. Verfahren nach einem der vorangegangenen Ansprüche, bei dem das Entfernen der abgefilterten Stoffe von der Oberseite bzw. Zulaufseite des Siebabschnitts durch Freispülen und/oder Freiblasen von der Unterseite bzw. Ablaufseite des Siebabschnitts her unterstützt wird.

5. Verfahren nach einem der vorangegangenen Ansprüche, bei dem das Entfernen der abgefilterten Stoffe durch Absaugen auf der Oberseite bzw. Zulaufseite des Siebabschnitts vorgenommen wird.

6. Anordnung zum kontinuierlichen Entfernen von abfilterbaren Stoffen aus einer in einem Behälter geklärten Flüssigkeit, enthaltend:
eine Ablaufrinne (20) zum Abziehen geklärter Flüssigkeit aus dem Behälter (2)durch Überlauf in die Ablaufrinne (20) ,
ein ausschließlich innerhalb der Ablaufrinne (20) angeordnetes Sieb (60), das sich in Längsrichtung der Ablaufrinne (20) erstreckt und die Ablaufrinne in einen auf der Oberseite bzw. Zulaufseite des Siebes gelegenen Aufnahmeraum für die zu filternde Flüssigkeit und einen auf der Unterseite bzw. Ablaufseite des Siebes gelegenen Ablaufraum für die gefilterte Flüssigkeit unterteilt, und
eine in Längsrichtung der Ablaufrinne und des Siebes bewegbare Vorrichtung (50) zum Entfernen der abgefilterten Stoffe von der Oberseite bzw. Zulaufseite des innerhalb der Ablaufrinne (20) angeordneten Siebes (60).

7. Anordnung nach Anspruch 6, enthaltend eine zusammen mit der Entfernungsvorrichtung (50) längs der Ablaufrinne (20) und des Siebes (60) bewegbare Vorrichtung (40) zum Anheben eines Abschnitts des Siebes (60) zwecks Entfernung der auf der Oberseite des jeweils angehobenen Siebabschnitts abgefilterten Stoffe mittels der Entfernungsvorrichtung (50), und eine von der Anhebevorrichtung (40) mitgeführte Abdeckung (70), die die beim Anheben des jeweiligen Siebabschnitts entstehende Umgehung abdeckt, so daß im wesentlichen keine gefilterte Flüssigkeit vom Aufnahmeraum in den Ablaufraum der Ablaufrinne (20) gelangen kann.

8. Anordnung nach Anspruch 6, bei der das Sieb (60) im wesentlichen vertikal stehend in der Ablaufrinne (20) angeordnet ist.

9. Anordnung nach einem der Ansprüche 6 bis 8, enthaltend eine mit der Entfernungsvorrichtung (50) in der Längsrichtung der Ablaufrinne (20) und des Siebes (60) bewegbare, auf der Unterseite bzw. Ablaufseite des jeweils zu reinigenden Siebabschnitts vorgesehene Freispül- und /oder Freiblasvorrichtung (46) zum Ablösen der auf der Oberseite bzw. Zulaufseite des Siebes (60) abgefilterten Stoffe.

10. Anordnung nach einem der Ansprüche 6 bis 9, bei der die Entfernungsvorrichtung (50) eine Absaugvorrichtung enthält.

11. Anordnung nach einem der Ansprüche 6 bis 10, bei der die bewegbare Vorrichtung (50) mit dem sich hin- und herbewegenden oder umlaufenden Räumer (3) einer Kläranlage verbunden ist.

## Claims

1. A process for a continuous removal of filterable substances from a liquid purified within a container, **characterized in that**
purified liquid is let out from the container (2) via a drain (20) by overflowing herein (20),
the liquid let out from the container flows from the upper side or the supply side respectively through a long stretched sieve (60), which is exclusively arranged inside the drain (20),
the filtered liquid, which has passed through the sieve (60), is carried off the drain (20) on the lower side or outlet side of the sieve, and
filtered substances are removed in longitudinal direction of the sieve (60) by successive sieve sections on the upper side or supply side of the sieve.

2. A process according to Claim 1, **characterized in that** a mobile sieve section, which is situated in longitudinal direction of the mainly immobile sieve (60), is lifted above the liquid level (112) within the drain (20) by removing in this way the filtered substances from each sieve lifted above the liquid level (112) on the upper side, and by means of which the possibly appearing sieve escapes are held covered so that it is not possible for non-filtered liquid to go from the upper side or supply side of the sieve (60) to its lower side or outlet side.

3. A process according to Claim 1, **characterized in that** the successive sieve sections to be cleaned are shielded on the sieve (60) upper side or supply side in such a way that as little as possible non-filtered liquid reaches a mobile space, which is to catch the substances filtered by the sieve and which is situated in the longitudinal direction of the sieve (60).

4. A process according to any of preceding Claims, **characterized in that** the removal of the filtered substances from the upper side respectively supply side of the sieve section is supported by rinsing and/or blowing by the lower or outlet side sieve section.

5. A process according to any of preceding claims, **characterized in that** the removal is carried out by suctioning the filtered substances from the upper or supply side of the sieve section.

6. A system for a continuous removal of substances to be filtered from a liquid purified within a container including:
a drain (20) for the passage of purified liquid out of the container (2) via overflowing into the drain (20),
a sieve (60) arranged exclusively inside the drain (20), which extends in longitudinal direction of the drain (20) and which subdivides the drain into a receiving space for the liquid to be filtered, and an outlet room for the filtered liquid, wherein the former is situated on the sieve upper or supply side and the latter is situated on its lower or outlet side and
a device (50), which can be moved in longitudinal direction of both the drain and the sieve, situated inside the drain (20), in order to remove the filtered substances on the upper or supply side of the sieve (60).

7. A system according to Claim 6, **characterized in that** it includes a mobile device (40), which moves together with the removing device (50), along both the drain (20) and the sieve (60) to lift a section of the sieve (60) in order to remove the filtered substances from the upper side of each lifted section by means of the removing device (50), and a cover (70) incorporated in a lifting device (40), which covers the escape when lifting the respective sieve section so that hardly any filtered liquid can be reached from the receiver space to the outlet space of the drain (20).

8. A system according to Claim 6, **characterized in that** the sieve (60) is arranged upright inside the drain (20).

9. A system according to either of claims 6 to 8 with a mobile device for rinsing and blowing (46), **characterized in that** they are situated either together with the removing device (50) in longitudinal direction along both the drain (20) and the strainer (60), or on the lower or outlet side of each sieve section to be cleaned for removing the substances, which have been filtered on the upper or supply side of the sieve (60).

10. A system according to either of claims 6 to 9 **characterized in that** the removing device (50) provides a suction device.

11. A system according to either of claims 6 to 10, **characterized in that** the mobile device (50) is connected to the to and fro movement or rotating broacher (3) of a sewage plant.

## Revendications

1. Procédé pour éliminer de façon continue des matériaux filtrables d'un liquide purifié dans un récipient, **caractérisé en ce que**
en moyennant un canal d'évacuation (20) le liquide purifié est retiré du récipient (2) par déversement dans le canal d'évacuation (20),
le liquide retiré coule du côté supérieur ou du côté d'amenée respectivement à travers un long crible étiré (60) disposé exclusivement à l'intérieur du canal d'évacuation (20), et
le liquide filtré, circulant à travers le crible (60) est conduit du canal d'évacuation (20) vers le côté inférieur ou vers le côté d'évacuation dudit crible, et
les matériaux filtrés sont éliminés suivant la direction longitudinale du crible (60) par des sections de crible consécutives sur le côté supérieur ou sur le côté d'amenée.

2. Procédé selon la revendication 1, **caractérisé en ce qu'**une section de crible mobile située suivant la direction longitudinale de la crible fixe principale (60) est relevée au-dessus du niveau de liquide (112) dans le canal d'évacuation (20), en éliminant de cette façon, les matériaux filtrés du côté supérieur de chaque section de crible sur le niveau du liquide (112) de même que la possibilité de manifestation d'échappements du crible de la section du crible est couverte le cas échéant, de sorte que pour l'essentiel, il est impossible que le liquide non filtré puisse parvenir au côté supérieur ou au côté d'amenée du crible (60) jusqu'à son côté inférieur ou à son côté d'évacuation.

3. Procédé selon la revendication 1, **caractérisé en ce que** les sections de crible à nettoyer de façon consécutive sur le côté supérieur ou sur le côté d'amenée du crible (60) sont protégées, de façon que le moins possible de liquide non filtré atteigne un espace mobile, servant à recueillir les matériaux filtrés par le crible situé suivant la direction longitudinale du crible (60).

4. Procédé selon une des revendications précédentes, **caractérisé en ce que** l'élimination des matériaux filtrés du côté supérieur ou du côté d'amenée de la section de crible est réalisée en rinçant et/ou en soufflant librement du côté inférieur ou du côté d'évacuation de la section de crible.

5. Procédé selon une des revendications précédentes, **caractérisé en ce que** l'élimination des matériaux filtrés est réalisée par aspiration sur le côté supérieur ou sur le côté d'amenée de la section de crible.

6. Système pour éliminer de façon continue les matériaux qui doivent être filtrés d'un liquide purifié dans un récipient, contenant:
- Un canal d'évacuation (20) pour le passage du liquide purifié du récipient (2) en moyennant déversement dans le canal d'évacuation (20),
- Un crible (60) disposé de façon exclusive à l'intérieur du canal d'évacuation (20), lequel s'étend suivant la direction longitudinale du canal d'évacuation (20) et lequel subdivise le canal d'évacuation créant un espace de logement pour le liquide à filtrer et une chambre d'évacuation pour le liquide filtré, et où le support est situé sur le côté supérieur ou sur le côté d'amenée du crible et celui-ci est situé sur son côté inférieur ou sur son côté d'évacuation et,
un dispositif mobile (50) pouvant se déplacer suivant la direction longitudinale du canal d'évacuation et du crible, situé à l'intérieur du canal d'évacuation (20) pour éliminer les matériaux filtrés du côté supérieur ou du côté d'amenée du crible (60).

7. Système selon la revendication 6, **caractérisé en ce qu'**il inclut un dispositif mobile (40) qui se déplace avec le dispositif d'élimination (50) le long du canal d'évacuation (20) et du crible (60) pour soulever une section du crible (60) en vue d'éliminer les matériaux filtrés du côté supérieur de la section de crible soulevée en moyennant le dispositif d'élimination (50), et une couverture (70) inclue dans le dispositif de relèvement (40), couvrant l'échappement au moment du soulèvement de la respective section de crible de sorte que pour l'essentiel aucun liquide filtré ne puisse parvenir de l'espace de logement à l'espace d'évacuation du canal d'évacuation (20).

8. Système selon la revendication 6, **caractérisé en ce que** le crible (60) est disposé d'une façon essentiellement verticale à l'intérieur du canal d'évacuation (20).

9. Système selon une des revendications de 6 à 8, contenant un dispositif mobile pour rincer et souffler (46) **caractérisé en ce qu'**ils sont situés ensemble avec le dispositif d'élimination (50) suivant la direction longitudinale du canal d'évacuation (20) et du crible (60), sur le côté inférieur ou sur le côté d'évacuation de chaque section de crible qui doit être nettoyée pour éliminer les matériaux qui ont été filtrés sur le côté supérieur ou sur le côté d'amenée du crible (60).

10. Disposition selon une des revendications de 6 à 9, **caractérisé en ce que** le dispositif d'élimination (50) contient un dispositif d'aspiration.

11. Système selon une des revendications de 6 à 10, **caractérisé en ce que** le dispositif mobile (50) est connecté avec l'espace d'un épurateur qui orbite ou qui se déplace (3).
